# EUROPÄISCHE PATENTANMELDUNG

(11) **EP 2 219 362 A2**
(43) Veröffentlichungstag der Anmeldung: **18.08.2010**
(21) Anmeldenummer: 10150726.7
(22) Anmeldetag: 14.01.2010
(51) Int. Cl.: H04N 1/387, H04N 1/405

(54) **Verfahren zur digitalen Rasterung eines Halbtonbildes**

(30) Priorität: 12.02.2009 DE 102009008775
(71) Anmelder: Heidelberger Druckmaschinen AG, 69115 Heidelberg (DE)
(72) Erfinder: Kerz, Ludo, 55268 Nieder-Olm (DE)

(57) **Zusammenfassung**

Es wird ein Verfahren zur digitalen Rasterung eines Halbtonbildes mit einem ersten Raster (16) mit einer beliebigen gewünschten Rasterweite (rwsoll) und einem beliebigen gewünschten Rasterwinkel (asoll) durch Auslesen einer Schwellwertmatrix und Vergleichen der ausgelesenen Schwellwerte mit den Farbwerten des Halbtonbildes offenbart. Dem ersten Raster (16) ist ein erstes Koordinatensystem mit x,y-Adressen zugeordnet, und die Schwellwertmatrix ist die eines zweiten gegebenen Rasters (18) mit einer gegebenen Rasterweite (rwist) und einem gegebenen Rasterwinkel (aist) in einem zweiten Koordinatensystem. Ein Geometriefehler bei einer Übertragung eines gerasterten Halbtonbildes auf einen Bedruckstoff wird bestimmt. Während des Auslesens der Schwellwerte wird ein auf dem Geometriefehler basierender Fehler zwischen den x,y-Adressen des ersten und zweiten Koordinatensystems ermittelt wird und der Fehler durch eine Korrektur der x,y-Adrcssc des zweiten Koordinatensystems zum Auslesen der Schwellwertmatrix verringert, sobald der Fehler einen vorgegebenen Grenzwert überschreitet.

## Beschreibung

Die Erfindung betrifft ein Verfahren zur digitalen Rasterung eines Halbtonbildes gemäß dem Oberbegriff des Anspruchs 1.

Bei der Übertragung von Informationen auf einen Bedruckstoff in einem Sujet, seien es Bilder oder Texte, können Geometriefehler auftreten, so dass das Sujet Abweichung von einer gewünschten Geometrie in der Lage und/oder in Form aufweist. Eine in der Praxis besonders häufig auftretende Quelle, insbesondere beim Offsetdruck, ist die Papierverformung, welche sich in einer Verzerrung des Sujets auswirkt. Die Geometriefehler können insbesondere quantitativ unterschiedlich für einzelne Farbauszüge eines Farbsatzes sein. Diese Verzerrungen sind vor allem im Mehrfarbendruck störend, oft sogar sichtbar, wenn einzelne Farbauszüge mit sich quantitativ und/oder qualitativ voneinander unterscheidenden Verzerrungen auf dem Bedruckstoff übereinander gedruckt werden.

Beispielsweise im Dokument DE 197 24 066 A1 wird ein Verfahren zur Korrektur von Geometriefehlern, wie Umfangsregisterfehler, Drucklängen- oder Druckbreitenfehler, Sujetverdrehungen, trapezoide Verzerrungen und dergleichen, bei der Übertragung von Informationen auf einen Bedruckstoff offenbart. Eine aus einer geräteunabhängigen Beschreibung der zu druckenden Information erstelltes digitales Rasterbild wird einer Matrixmanipulationseinrichtung zugeführt. Dort werden Elemente der Matrizen in Abhängigkeit von vorher messtechnisch erzeugten Parameterwerten aus einer Datenbank einer Korrekturtransformation unterzogen werden, bevor sie einer digitalen Bebilderungseinheit zugeführt werden.

Es ist eine Reihe von Verfahren bekannt, wie ein digitales Rasterbild aus einem Halbtonbild erzeugt werden kann. Besondere Bedeutung kommt dabei dem im Dokument EP 0 990 343 B1 beschriebenen Verfahren zur digitalen Rasterung zu: Es wird ein Verfahren zur digitalen Rasterung eines Halbtonbildes mit Rastern beliebiger Rasterweiten und Rasterwinkel beschrieben, bei dem die Rasterung durch Auslesen einer Schwellwertmatrix und Vergleichen der ausgelesenen Schwellwerte mit den Farbwerten des Halbtonbildes erfolgt. Dazu wird eine Schwellwertmatrix verwendet, in der die Schwellwerte einen oder mehrere Rasterpunkte eines unter einem Winkel angeordneten Rasters repräsentieren, mit dem die gewünschte Rasterweite und der gewünschte Winkel angenähert wird. Während des Auslesens der Schwellwerte wird ein Fehler zwischen dem gewünschten Raster und dem durch die Schwellwertmatrix angenäherten Raster ermittelt, und der Fehler wird durch eine Korrektur der Ausleseadresse für die Schwellwertmatrix kompensiert, sobald der Fehler einen vorgegebenen Grenzwert überschreitet. Mit diesem Verfahren ist es insbesondere möglich, ein irrationales Raster, das heißt, ein unter einem Winkel mit einem irrationalen Tangens liegendes Raster, durch ein rationales Raster, das heißt, ein unter einem Winkel mit einem rationalen Tangens liegendes Raster, mit hoher Genauigkeit anzunähern. Eine Weiterentwicklung dieses Verfahrens ist in der hinterlegten deutschen Patentanmeldung DE 10 2008 052 126.4 beschrieben.

Bei einer Durchführung der digitalen Rasterung mit einer für jeden Farbauszug individueller Skalierung ist nachteilig, dass zwar die Inhalte gestaucht oder gestreckt werden, nicht aber das unterliegende Raster. Es resultieren daraus leicht voneinander abweichende Rasterfrequenzen der Farbauszüge mit der damit verbundenen Farbdrift oder mit den entsprechenden Moiré- Erscheinungen.

Eine Nachbearbeitung von digitalen Rasterbildern in einem nachgeordneten Verarbeitungsschritt gemäß der technischen Lehre des Dokuments DE 197 24 066 A1 ist in nachteiliger Weise aufwändig.

Aufgabe der vorliegenden Erfindung ist es, ein Verfahren zur digitalen Rasterung eines Halbtonbildes zu schaffen, in welchem bei der Erzeugung eines Rasterbildes aus einem Halbtonbild bei Abdruck des Rasterbildes in einer Druckmaschine auftretenden Geometriefehlern entgegengewirkt wird.

Diese Aufgabe wird erfindungsgemäß durch Verfahren zur digitalen Rasterung eines Halbtonbildes mit den Merkmalen gemäß Anspruch 1 gelöst. Vorteilhafte Weiterbildungen der Erfindung sind in den abhängigen Ansprüchen charakterisiert.

Im erfindungsgemäßen Verfahren zur digitalen Rasterung eines Halbtonbildes mit einem ersten Raster mit einer beliebigen gewünschten Rasterweite (rwsoll) und einem beliebigen gewünschten Rasterwinkel (asoll) wird eine Schwellwertmatrix ausgelesen. Es werden die ausgelesenen Schwellwerte mit den Farbwerten des Halbtonbildes verglichen. Dabei ist dem ersten Raster ein erstes Koordinatensystem mit x,y-Adressen zugeordnet, und die Schwellwertmatrix ist die eines zweiten gegebenen Rasters mit einer gegebenen Rasterweite (rwist) und einem gegebenen Rasterwinkel (aist), dem ein zweites Koordinatensystem zugeordnet ist. Im erfindungsgemäßen Verfahren wird wenigstens ein Geometriefehler bei einer Übertragung eines gerasterten Halbtonbildes auf einen Bedruckstoff bestimmt. Es wird während des Auslesens der Schwellwerte ein auf dem wenigstens einen Geometriefehler basierender Fehler zwischen den x,y-Adressen des ersten und zweiten Koordinatensystems ermittelt. Und der Fehler wird durch eine Korrektur der x,y-Adresse des zweiten Koordinatensystems zum Auslesen der Schwellwertmatrix verringert, insbesondere kompensiert, sobald der Fehler einen vorgegebenen Grenzwert überschreitet.

Der auf dem wenigstens einen Geometriefehler basierender Fehler kann insbesondere von der x,y-Adresse des zweiten Koordinatensystems abhängig sein. Mit anderen Worten, der Fehler ist insbesondere nicht konstant über die gesamte zu rasternde Fläche des Halbtonbildes. Der Geometriefehler kann insbesondere einer der im einleitenden Teil genannten Geometriefehler sein. Der auf dem wenigstens einen Geometriefehler basierende Fehler kann insbesondere eine Abweichung sein, welche das zu bebildernde Raster zur Kompensation des ortsabhängigen Geometriefehlers derart ortsabhängig verzerrt, dass der Abdruck eines in diesem Raster bebilderten Bildträgers, beispielsweise einer Druckform, bei Auftritt der zu Geometriefehlern führenden Prozesse zu einem entzerrten Bild führt, in dem die Geometriefehler verringert sind oder das bevorzugt sogar vollständig von Geometriefehlern befreit ist. Mit anderen Worten, der Fehler wirkt den Konsequenzen der Quellen von Geometriefehlern derart entgegen, dass ein gewünschtes Bild erzeugt werden kann.

Das Resultat der digitalen Rasterung ist eine Bitmap, insbesondere eine digitale Bitmap. Im erfindungsgemäßen Verfahren wird insbesondere eine Bitmap erzeugt, indem mit Hilfe der Schwellwertmatrix entschieden wird, ob ein Bit mit dem Wert 1 oder dem Wert 0 zu setzen ist.

Das erfindungsgemäße Verfahren kann für eine Mehrzahl von Farbauszügen eines Farbsatzes durchgeführt werden. Insbesondere kann für jeden Farbauszug ein anderer Fehler bestehen und erfindungsgemäß verringert, insbesondere kompensiert werden. Der Geometriefehler kann insbesondere ein durch den sogenannten (paper growth) begründeter Registerfehler zwischen einzelnen Farbauszügen sein. Der Geometriefehler kann insbesondere eine trapezförmige Verzerrrung des Druckbildes darstellen, welche für jeden der Farbauszüge quantitativ unterschiedlich stark ist, so dass von Druckwerk zu Druckwerk ansteigende oder größer werdende Registerfehler auftreten.

Durch das erfindungsgemäße Verfahren ist es möglich, ein ortsvariables Raster zu erzeugen, indem die Rasterfrequenz und/oder der Rasterwinkel dynamisiert werden, also Rasterfrequenz und/oder der Rasterwinkel während der Prozessierung eines Halbtonbildes zu einem Rasterbild ortsabhängig zu variieren. Die Rasterfrequenz kann entgegen dem Geometriefehler über die zu rasternde Fläche variiert werden. Bevorzugt wird der Fehler durch die Korrektur kompensiert. Bei einer Skalierung eines Farbauszugs während der Rasterung wird im erfindungsgemäßen Verfahren gleichzeitig entsprechend das Raster angepasst.

Der Offenbarungsgehalt des Dokumentes EP 0 990 343 B1 wird hiermit durch explizite Bezugnahme vollständig in den Offenbarungsgehalt dieser Darstellung aufgenommen (incorporation by reference). Insbesondere können die in diesem Dokument EP 0 990 343 B1 offenbarten Merkmale und Merkmalskombinationen auch Merkmale oder Merkmalskombinationen des erfindungsgemäßen Verfahrens darstellen.

Des Weiteren wird hiermit auch der Offenbarungsgehalt der deutschen Patentanmeldung DE 10 2008 052 126.4 durch explizite Bezugnahme vollständig in den Offenbarungsgehalt dieser Darstellung aufgenommen (incorporation by reference). Insbesondere können die in diesem DE 10 2008 052 126.4 offenbarten Merkmale und Merkmalskombinationen auch Merkmale oder Merkmalskombinationen des erfindungsgemäßen Verfahrens darstellen.

In bestimmten Ausführungsformen des erfindungsgemäßen Verfahrens kann wenigstens eine weitere Schwellwertmatrix bereitgestellt sein, die einem dritten Koordinatensystem mit x,y-Adressen zugeordnet ist und in Bezug auf die x,y-Adressen des zweiten Koordinatensystems um einen Bruchteil des Abstandes zweier x- und/oder y-Adressen in x- und/oder y-Richtung verschoben ist. Zur Korrektur der x,y-Adresse des zweiten Koordinatensystems kann dann eine x,y-Adresse des dritten Koordinatensystems zum Auslesen der weiteren Schwellwertmatrix verwendet werden. Insbesondere können dabei die Werte der wenigstens einen weitere Schwellwertmatrix mit den Werten der Schwellwertmatrix und/oder die zweiten und dritten Koordinatensysteme identisch sein.

Es ist besonders bevorzugt, dass in Ausführungsformen des erfindungsgemäßen Verfahrens die Korrektur der x,y-Adresse des zweiten Koordinatensystems durch einen Sprung von einer aktuellen x,y-Adresse zu einer anderen x,y-Adresse realisiert wird.

In bevorzugten Ausführungsformen ist des Weiteren ist die Korrektur der x,y-Adresse des zweiten Koordinatensystems derart bemessen, dass sie den auf dem wenigstens einen Geometriefehler basierenden Fehler und einen weiteren Fehler, der auf einer Abweichung der Rasterwinkel (rwsoll, rwist) und/oder der Rasterweiten (asoll, aist) des ersten und des zweiten Koordinatensystems voneinander beruht, gemeinsam verringert.

In einer ersten Gruppe von Realisierungen des erfindungsgemäßen Verfahrens wird der Fehler fortlaufend für jede Ausleseadresse ermittelt und verringert, sobald der Grenzwert überschritten wird. Dagegen wird in einer zweiten Gruppe von Realisierungen im Voraus berechnet, nach wievielen Ausleseadressen der Fehler den Grenzwert überschreitet, die so ermittelte Anzahl von Ausleseadressen wird gespeichert, und der Fehler wird nach dem Abarbeiten dieser Anzahl von Ausleseadressen verringert.

Im erfindungsgemäßen Verfahren kann die Ausleseadresse und der Grenzwert jeweils aus einer x- und einer y-Komponente bestehen. Der ermittelte auf dem wenigstens einen Geometriefehler basierende Fehler kann in einen x-Fehler, der einer x-Zeile des Rasters beziehungsweise der Schwellwertmatrix zugeordnet ist, und/oder einen y-Fehler, der einer y-Spalte des Rasters beziehungsweise der Schwellwertmatrix zugeordnet ist, zerlegt werden. Die Korrektur der Ausleseadresse kann schließlich durch Addieren oder Subtrahieren von Korrekturwerten auf die x- und die y-Komponente der Ausleseadresse erfolgen, sobald die x- und/oder die y-Komponente des Grenzwertes überschritten wird.

Der Grenzwert kann eine x- und eine y-Komponente aufweisen, die jeweils einem Bruchteil eines Adressschritts entsprechen.

Des Weiteren kann eine Schwellwertmatrix für ein Bitmuster verwendet wird, das n x m Rasterpunktzellen repräsentiert. Mit anderen Worten, die Schwellwertmatrix kann auf einer Superzelle, die n x m Rasterpunkte enthält, basieren oder eine derartige Superzelle sein. Dabei können in bestimmten Ausführungsformen des erfindungsgemäßen Verfahrens Eckpunkte von den n x m Rasterpunktzellen ausgewählt werden, die relativ zu ganzen Adressschritten in x- und/oder y-Richtung um einen Bruchteil eines Adressschritts verschoben sind, und es können diesen Eckpunkten am nächsten liegende ganzzahlige Adresskomponenten als Korrekturwerte verwendet werden. Insbesondere kann eine Koordinate von den ausgewählten Eckpunkten auf einem ganzen Adressschritt liegen und die andere Koordinate um einen Bruchteil eines Adressschritts verschoben sein.

In einer vorteilhaften Weiterentwicklung der erfindungsgemäßen werden die Schwellwerte der Schwellwertmatrix aus einer Speichermatrix ausgelesen, wobei die Speichermatrix eine Repräsentation der Schwellwertmatrix in einer zum zweiten Koordinatensystem ausgerichteten Form derart ist, dass x,y-Adressen des zweiten Koordinatensystems zum Auslesen der Speichermatrix verwendbar sind. Mit anderen Worten, die Schwellwertmatrix für ein unter einem Rasterwinkel (aist) ungleich 0 orientierten Raster ist in um den Rasterwinkel gedrehter Form als Speichermatrix hinterlegt.

Diese Weiterentwicklung ist insbesondere aufgrund der vorteilhaft höheren Abarbeitungsgeschwindigkeit des erfindungsgemäßen Verfahrens besonders bevorzugt.

In einer Weiterentwicklung des erfindungsgemäßen Verfahrens kann der Inhalt der Speichermatrix im Vergleich zum Inhalt der Schwellwertmatrix eine reduzierte Redundanz aufweisen oder redundanzfrei sein. Anders gesagt, eine mehrfache Speicherung identischer Inhalte der Schwellwertmatrix kann in der Speichermatrix vermieden sein, indem besagter Inhalt in geringer Anzahl, bevorzugt nur einmal abgespeichert ist. Offensichtlich impliziert diese Vorgehensweise, dass die Speicherwertmatrix mehrfach an derselben Adresse auszulesen ist, wenn die Schwellwertmatrix an einer Adresse des besagten Inhalts auszulesen wäre. Entsprechende Auslesevorschriften sind erfindungsgemäß vorgesehen. In vorteilhafter Weise ist der Speicherplatzbedarf für die Speichermatrix reduziert.

Insbesondere kann das Auslesen der Speichermatrix in Inkrementen der x,y-Adresse einem Auslesen der Schwellwertmatrix in Inkrementen der x,y-Koordinaten eines unter dem gegebenen Rasterwinkel (aist) zu dem zweiten Koordinatensystem gedreht liegenden Koordinatensystems entsprechen.

Weitere Vorteile der Erfindung werden in der nachfolgenden Beschreibung anhand eines Beispiels unter Bezugnahme auf die beigefügte Figur dargestellt. Es zeigt:

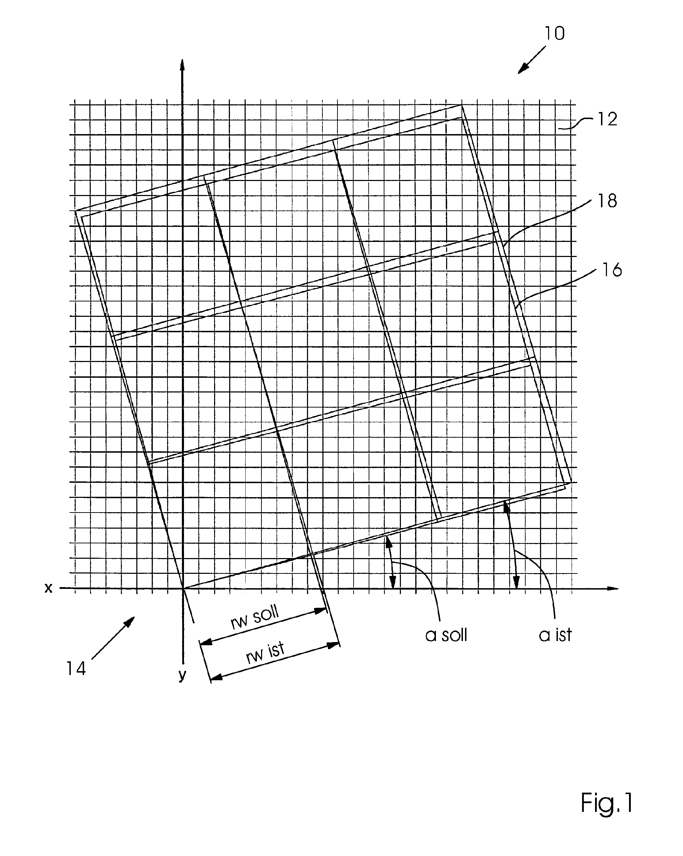

- Figur 1: eine schematische Darstellung der Relation des Rasters zum davon aufgrund eines Geometriefehlers abweichenden gegebenen Raster.

Für das Beispiel der schematischen Darstellung der Relation des gewünschten Rasters zum gegebenen Raster in der Figur 1, ist vereinfacht angenommen, dass ein gleichmäßiger Papierverzug für einen bestimmten Farbauszug zu kompensieren ist. Der Papierverzug bewirkt den beispielhaften Geometriefehler, dass das gegebene Raster im Vergleich zum gewünschten Raster einen abweichenden Rasterwinkel und eine abweichende Rasterweite aufweist. Während für einen nur hier beispielhaft zur Veranschaulichung angenommenen gleichmäßigen Papierverzug diese Abweichung an unterschiedlichen Koordinatenpunkten konstant ist, ist im allgemeinen Fall die Abweichung ortsabhängig. Das gewünschte Raster ist das zu bebildernde Raster, das zur Kompensation des ortsabhängigen Geometriefehlers derart ortsabhängig verzerrt ist, dass der Abdruck eines Bildträgers, beispielsweise einer Druckform, bei Auftritt der zu Geometriefehlern führenden Prozesse zu einem entzerrten Bild führt, in dem die Geometriefehler verringert sind oder das bevorzugt sogar vollständig von Geometriefehlern befreit ist.

In der Figur 1 ist eine Bitmap 10 mit einzelnen, zu setzenden Pixel 12 gezeigt. Die Entscheidung, ob ein Pixel 12 mit einer 1 oder einer 0 zu setzen ist, wird für die einzelnen x, y-Adressen in einem inkrementelles Abarbeiten der x,y-Adressen im Koordinatensystem 14 getroffen. Im durch explizite Bezugnahme in diese Darstellung aufgenommenen Dokument EP 0 990 343 B1 ist beschrieben, wie ein Fehler zwischen einem (zu bebildernden und/oder gewünschten) Raster 16 zu einen (für die digitale Rasterung) gegebenen Raster 18 bestimmt und korrigiert werden kann. Diese Vorgehensweise wird erfindungsgemäß insofern angewendet, als der zu korrigierende Fehler auf dem Geometriefehler beruht. Es handelt sich somit um einen von der x,y-Adresse abhängigen (ortsabhängigen) oder nicht konstanten Fehler. Auf die im Dokument EP 0 990 343 B1 beschriebene Vorgehensweise wird hier explizit verwiesen.

Im betrachteten Beispiel sei in X-Richtung ein Papierverzug von +0.1 % zu kompensieren. In X-Richtung ist dann für die digitale Rasterung eine gegenläufige Skalierung von -0.1 % einzustellen. Bei einer beispielhaften Belichteraufloesung von 1000 lines/cm bedeutet das, dass nach 1000 Belichterpunkten (Pixel) ein auf dem Geometriefehler basierender Rasterfehler von einem Belichterpunkt auftritt. Im konkreten Beispiel werden von der Korrekturlogik Korrektursprünge immer dann erzeugt wenn ein Fehler von 1/3 Belichterpunkten aufgelaufen ist. Dann wird man nach jeweils 333 in X-Richtung belichteten Punkten einen Korrektursprung eingefügt.

### BEZUGSZEICHENLISTE

- 10: Bitmap
- 12: Pixel
- 14: Koordinatensystem
- 16: Raster
- 18: gegebenes Raster
- Rwsoll: gewünschte Rasterweite
- Rwist: gegebene Rasterweite
- Asoll: gewünschter Rasterwinkel
- Aist: gegebener Rasterwinkel

## Patentansprüche

1. Verfahren zur digitalen Rasterung eines Halbtonbildes mit einem ersten Raster (16) mit einer beliebigen gewünschten Rasterweite (rwsoll) und einem beliebigen gewünschten Rasterwinkel (asoll) durch Auslesen einer Schwellwertmatrix und Vergleichen der ausgelesenen Schwellwerte mit den Farbwerten des Halbtonbildes, wobei dem ersten Raster (16) ein erstes Koordinatensystem mit x,y-Adressen zugeordnet ist und die Schwellwertmatrix die eines zweiten gegebenen Rasters (18) mit einer gegebenen Rasterweite (rwist) und einem gegebenen Rasterwinkel (aist) ist, dem ein zweites Koordinatensystem zugeordnet ist,
**dadurch gekennzeichnet,**
**dass** wenigstens ein Geometriefehler bei einer Übertragung eines gerasterten Halbtonbildes auf einen Bedruckstoffbestimmt wird, während des Auslesens der Schwellwerte ein auf dem wenigstens einen Geometriefehler basierender Fehler zwischen den x,y-Adressen des ersten und zweiten Koordinatensystems ermittelt wird und der Fehler durch eine Korrektur der x,y-Adresse des zweiten Koordinatensystems zum Auslesen der Schwellwertmatrix verringert wird, sobald der Fehler einen vorgegebenen Grenzwert überschreitet.

2. Verfahren gemäß Anspruch 1,
**dadurch gekennzeichnet,**
**dass** wenigstens eine weitere Schwellwertmatrix bereitgestellt ist, die einem dritten Koordinatensystem mit x,y-Adressen zugeordnet ist und in Bezug auf die x,y-Adressen des zweiten Koordinatensystems um einen Bruchteil des Abstandes zweier x- und/oder y-Adressen in x- und/oder y-Richtung verschoben ist, und dass zur Korrektur der x,y-Adresse des zweiten Koordinatensystems eine x,y-Adresse des dritten Koordinatensystems zum Auslesen der weiteren Schwellwertmatrix verwendet wird.

3. Verfahren gemäß Anspruch 2,
**dadurch gekennzeichnet,**
**dass** die Werte der wenigstens einen weitere Schwellwertmatrix mit den Werten der Schwellwertmatrix und/oder die zweiten und dritten Koordinatensysteme identisch sind.

4. Verfahren gemäß einem der vorstehenden Ansprüche,
**dadurch gekennzeichnet,**
**dass** die Korrektur der x,y-Adresse des zweiten Koordinatensystems durch einen Sprung von einer aktuellen x,y-Adresse zu einer anderen x,y-Adresse realisiert wird.

5. Verfahren gemäß einem der vorstehenden Ansprüche,
**dadurch gekennzeichnet,**
**dass** die Korrektur der x,y-Adresse des zweiten Koordinatensystems derart bemessen ist, dass sie den auf dem wenigstens einen Geometriefehler basierenden Fehler und einen weiteren Fehler, der auf einer Abweichung der Rasterwinkel (rwsoll, rwist) und/oder der Rasterweiten (asoll, aist) des ersten und des zweiten Koordinatensystems voneinander beruht, gemeinsam verringert.

6. Verfahren gemäß einem der vorstehenden Ansprüche,
**dadurch gekennzeichnet,**
**dass** der Fehler durch die Korrektur kompensiert wird.

7. Verfahren gemäß einem der vorstehenden Ansprüche,
**dadurch gekennzeichnet,**
**dass** der Fehler fortlaufend für jede Ausleseadresse ermittelt wird und verringert wird, sobald der Grenzwert überschritten wird, oder dass im Voraus berechnet wird, nach wievielen Ausleseadressen der Fehler den Grenzwert überschreitet, die so ermittelte Anzahl von Ausleseadressen gespeichert wird, und der Fehler nach dem Abarbeiten dieser Anzahl von Ausleseadressen verringert wird.

8. Verfahren gemäß einem der vorstehenden Ansprüche,
**dadurch gekennzeichnet,**
**dass** die Ausleseadresse und der Grenzwert jeweils aus einer x- und einer y-Komponente bestehen, der ermittelte auf dem wenigstens einen Geometriefehler basierende Fehler in einen x-Fehler, der einer x-Zeile des Rasters beziehungsweise der Schwellwertmatrix zugeordnet ist, und/oder einen y-Fehler, der einer y-Spalte des Rasters beziehungsweise der Schwellwertmatrix zugeordnet ist, zerlegt wird und die Korrektur der Ausleseadresse durch Addieren oder Subtrahieren von Korrekturwerten auf die x- und die y-Komponente der Ausleseadresse erfolgt, sobald die x- und/oder die y-Komponente des Grenzwertes überschritten wird.

9. Verfahren gemäß einem der vorstehenden Ansprüche,
**dadurch gekennzeichnet,**
**dass** der Grenzwert eine x- und eine y-Komponente aufweist, die jeweils einem Bruchteil eines Adressschritts entsprechen.

10. Verfahren gemäß einem der vorstehenden Ansprüche,
**dadurch gekennzeichnet,**
**dass** eine Schwellwertmatrix für ein Bitmuster verwendet wird, das n x m Rasterpunktzellen repräsentiert.

11. Verfahren gemäß Anspruch 10,
**dadurch gekennzeichnet,**
**dass** Eckpunkte von den n x m Rasterpunktzellen ausgewählt werden, die relativ zu ganzen Adressschritten in x- und/oder y-Richtung um einen Bruchteil eines Adressschritts verschoben sind und dass diesen Eckpunkten am nächsten liegende ganzzahlige Adresskomponenten als Korrekturwerte verwendet werden.

12. Verfahren gemäß Anspruch 11,
**dadurch gekennzeichnet,**
**dass** von den ausgewählten Eckpunkten eine Koordinate auf einem ganzen Adressschritt liegt und die andere Koordinate um einen Bruchteil eines Adressschritts verschoben ist.

13. Verfahren gemäß einem der vorstehenden Ansprüche,
**dadurch gekennzeichnet,**
**dass** die Schwellwerte der Schwellwertmatrix aus einer Speichermatrix ausgelesen werden, wobei die Speichermatrix eine Repräsentation der Schwellwertmatrix in einer zum zweiten Koordinatensystem ausgerichteten Form derart ist, dass x,y-Adressen des zweiten Koordinatensystems zum Auslesen der Speichermatrix verwendbar sind.

14. Verfahren gemäß Anspruch 13,
**dadurch gekennzeichnet,**
**dass** der Inhalt der Speichermatrix im Vergleich zum Inhalt der Schwellwertmatrix eine reduzierte Redundanz aufweist oder redundanzfrei ist.

15. Verfahren gemäß Anspruch 13 oder 14,
**dadurch gekennzeichnet,**
**dass** das Auslesen der Speichermatrix in Inkrementen der x,y-Adresse einem Auslesen der Schwellwertmatrix in Inkrementen der x,y-Koordinaten eines unter dem gegebenen Rasterwinkel (aist) zu dem zweiten Koordinatensystem gedreht liegenden Koordinatensystems entspricht.
